# EUROPÄISCHE PATENTANMELDUNG

(11) **EP 4 662 995 A1**
(43) Veröffentlichungstag der Anmeldung: **17.12.2025**
(21) Anmeldenummer: 25171181.8
(22) Anmeldetag: 17.04.2025
(51) Int. Cl.: A01C 7/08, A01C 7/10, A01C 15/04

(54) **PNEUMATISCHE VERTEILMASCHINE**

(30) Priorität: 13.06.2024 DE 202024103173 U
(71) Anmelder: RAUCH Landmaschinenfabrik GmbH, 77836 Rheinmünster (DE)
(72) Erfinder: Klein, Frederic, 67000 Straßbourg (FR); Boos, Florian, 76547 Sinzheim (DE)
(74) Vertreter: Lichti - Patentanwälte Partnerschaft mbB

(57) **Zusammenfassung**

Es wird eine pneumatische Verteilmaschine vorgeschlagen, welche einen Vorratsbehälter (2) zur Aufnahme von Verteilgut mit einer Auslassöffnung, ein der Auslassöffnung nachgeordnetes Dosierorgan (10), eine Mehrzahl an dem Dosierorgan nachgeordneten Übergabekammern (9) zur Überführung von mittels des Dosierorgans dosiertem Verteilgut in eine Mehrzahl an Förderleitungen (3), welche im Bereich einer jeweiligen Überkammer parallel zueinander angeordnet sind, ein Gebläse (7) zur Beaufschlagung der Förderleitungen mit einem Luftstrom sowie ein einer jeweiligen Förderleitung nachgeordnetes Verteilorgan (6) umfasst. Die Erfindung sieht vor, dass jeweils ein Bodenabschnitt (17) einer jeweiligen Übergabekammer um eine gemeinsame, im Wesentlichen senkrecht zur Erstreckungsrichtung einer jeweiligen Förderleitung angeordnete Schwenkachse (S) zwischen einer Schließstellung, in welcher der jeweilige Bodenabschnitt die jeweilige Übergabekammer verschließt, und einer Öffnungsstellung, in welcher der jeweilige Bodenabschnitt je einen Öffnungsquerschnitt einer jeweiligen Übergabekammer freigibt und außerhalb des jeweiligen Öffnungsquerschnittes angeordnet ist, schwenkbar ist.

## Beschreibung

Die Erfindung betrifft eine pneumatische Verteilmaschine, umfassend
- wenigstens einen Vorratsbehälter zur Aufnahme von Verteilgut mit wenigstens einer Auslassöffnung;
- wenigstens ein der Auslassöffnung des Vorratsbehälters nachgeordnetes Dosierorgan;
- eine Mehrzahl an dem Dosierorgan nachgeordneten Übergabekammern zur Überführung von mittels des Dosierorgans dosiertem Verteilgut in eine Mehrzahl an Förderleitungen, welche im Bereich einer jeweiligen Überkammer im Wesentlichen parallel zueinander angeordnet sind;
- wenigstens ein Gebläse zur Beaufschlagung der Förderleitungen mit einem Luftstrom; und
- wenigstens ein, einer jeweiligen Förderleitung nachgeordnetes Verteilorgan.

Derartige pneumatische Verteilmaschinen finden vornehmlich in der Landwirtschaft, insbesondere in Form von pneumatischen Düngerstreuern, Sämaschinen, Drillmaschinen oder dergleichen, zum Ausbringen von pulver- bzw. partikelförmigem Verteilgut, wie Dünger, Saatgut und dergleichen, in vielfältiger Ausgestaltung Verwendung und umfassen üblicherweise einen Vorratsbehälter zur Aufnahme des Verteilgutes, unterhalb dessen das oder die Dosierorgan(e) angeordnet ist bzw. sind. Während als Dosierorgane auch mit einer oder mehreren Auslauföffnung(en) des Vorratsbehälters zusammenwirkende, aktuatorisch oder manuell betätigte Dosierschieber zum Einsatz gelangen können, weisen die Dosierorgane von gattungsgemäßen pneumatischen Verteilmaschinen üblicherweise eine um eine Drehachse rotierbar angetriebene Dosierwalze auf, welche z.B. in Form einer Zellenrad- und/oder Nockenradwalze ausgestaltet sein kann. Die Dosierwalze ist in einem Dosiergehäuse gelagert, welches in der Regel einen im Bereich seiner Oberseite angeordneten, mit einer Auslassöffnung des Vorratsbehälters in Verbindung stehenden Dosiereinlass und einen im Bereich seiner Unterseite angeordneten Dosierauslass aufweist.

Pneumatische Verteilmaschinen, welche einerseits in leichter Bauart als Anbaugeräte verwirklicht sein können, welche mit dem Dreipunkt einer Zugmaschine, wie eines Traktors, koppelbar sind, anderseits auch in schwerer Bauart auf einen achsgestützten Nachläufer oder einen Selbstfahrer aufgesetzt sein können, umfassen ferner üblicherweise seitlich nach außen ragende Ausleger, welche in unterschiedlichem Abstand voneinander endende Förderleitungen aufnehmen. Zur Förderung des Verteilgutes dient ein Gebläse, dessen Druckleitung sich z.B. an den Dosierauslass des Dosiergehäuses eines jeweiligen Dosierorgans anschließt und in einen Druckverteiler mündet, an welchen sich die Förderleitungen anschließen. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Verteilgutes von der Dosierwalze des Dosierorgans an die Förderleitungen, um sicherzustellen, dass jeder Förderleitung dieselbe oder die jeweils gewünschte Menge an Verteilgut aufgegeben wird. Das Verteilgut wird schließlich pneumatisch über die nach außen umgelenkten Förderleitungen bis zu deren Ende gefördert, wo das Streugut an entsprechende Verteilorgane überführt wird. Letztere können je nach Ausgestaltung der Verteilmaschine bzw. je nach Art des auszubringenden Verteilgutes beispielsweise in Form von Prallorganen, wie Pralltellern, Prallplatten oder dergleichen, ausgestaltet sein, auf welche das in einer jeweiligen Förderleitung pneumatisch transportierte Verteilgut auftrifft und von dort im Wesentlichen fächerförmig auf dem Boden abgelegt wird. Andersartige Verteilorgane, wie sie insbesondere zur Verteilung von Saatgut, aber auch für die Tiefendüngung zum Einsatz gelangen, können Injektionseinrichtungen zum Einbringen des Verteilgutes in den Boden umfassen, wie sie beispielsweise aus der WO 2015/120982 A1 bekannt sind, um das Verteilgut in eine Bodenfurche einzubringen und die Bodenfurche vorzugsweise mittels nachgeordneter Schlitzverschlusseinrichtungen, wie sogenannten Striegeln oder dergleichen, wieder zu verschließen. Darüber hinaus sind als Verteilorgane auch Säscharen oder Säzinken geläufig, welche gleichfalls einen Schlitz in dem Boden erzeugen, in welchen das Verteilgut abgelegt werden kann.

Eine derartige pneumatische Verteilmaschine ist beispielsweise aus der WO 2018/219489 A1 bekannt. Die Verteilmaschine umfasst eine Mehrzahl an Dosierorganen, deren Dosierwalzen eine Mehrzahl an Dosierradsegmenten aufweisen, welche unabhängig voneinander gesteuert bzw. geregelt rotationsangetrieben sind. Jedes Dosierradsegment eines jeweiligen Dosierrades übergibt den von ihm dosierten Massenstrom an Verteilgut an je eine Übergabekammer einer jeweiligen Förderleitung, welche das Verteilgut einem jeweiliges Verteilorgan zuführt. Es ergibt sich somit eine sehr feine Unterteilung an möglichen Teilbreiten, wobei ein jedes Dosierradsegment eine Teilbreite der gesamten Arbeitsbreite, z.B. jeweils ein einziges oder Gruppen von Verteilorganen, der Verteilmaschine zu versorgen vermag.

Eine weitere pneumatische Verteilmaschine gemäß dem Oberbegriff des Anspruchs 1 ist der DE 10 2022 100 740 U1 zu entnehmen. Hinsichtlich der einem jeweiligen Dosierorgan nachgeordneten Übergabekammern zur Überführung von mittels des Dosierorgans dosiertem Verteilgut in eine Mehrzahl an Förderleitungen sieht die DE 10 2022 100 740 U1 vor, dass die Förderleitungen zwischen den Dosierorganen als getrennte Abschnitte ausgebildet sind, um einen kompletten Abschnitt derselben gemeinsam mit einer jeweiligen Übergabekammer nach unten klappen und auf diese Weise z.B. Abdrehproben durchführen oder den Vorratsbehälter entleeren zu können.

Die Übergabekammern der bekannten pneumatischen Verteilmaschinen, welche häufig mit einem Injektor mit einer Düse sowie einem Diffusor ausgestattet sind, sind einerseits aus Platzgründen, andererseits zur Erzielung eines möglichst geringen Schwerpunktes der Verteilmaschine und den Bestrebungen dahingehend, dem Vorratsbehälter ein möglichst großes Fassungsvermögen zu verleihen, üblicherweise auf einem sehr tiefen Höhenniveau unterhalb eines jeweiligen Dosierorgans angeordnet, welches seinerseits unterhalb einer jeweiligen Auslauföffnung des das Verteilgut aufnehmenden Vorratsbehälters positioniert ist. Folglich ist der zur Durchführung einer Abdrehprobe zur Verfügung stehende Raum in der Regel stark begrenzt und schwer zugänglich, zumal für die Abdrehprobe ein Abdrehproben-Sammelbehälter zur Aufnahme des während der Abdrehprobe dosierten Verteilgutes unterhalb der Übergabekammern angeordnet werden muss, um das über einen vorgegebenen Zeitraum mit einer vorgegebenen Einstellung des Dosierorgans dosierte Verteilgut auffangen und dessen Masse, in der Regel gravimetrisch, ermitteln zu können. Um die Arbeitsgänge des Düngens und/oder Säens mit Arbeitsgängen der Bodenbearbeitung platzsparend miteinander kombinieren zu können, sind einige pneumatische Verteilmaschinen, insbesondere in Form sogenannter Drillmaschinen, zudem häufig mit aktiven oder passiven Bodenbearbeitungsgeräten, wie z.B. Packerwalzen, Kreiseleggen und dergleichen, ausgestattet, was den für eine Abdrehprobe zur Verfügung stehenden Raum zusätzlich einschränkt. Indes ist es für die Abdrehprobe essentiell, dass das gesamte, während ihrer Durchführung dosierte Verteilgut sicher aufgefangen werden kann, um für eine hohe Genauigkeit der Einstellung der Dosierorgane beim späteren Arbeitsgang des Düngens/Säens zu sorgen und auch als "Abdrehfehler" bezeichnete Fehldosierungen, insbesondere Überdosierungen, infolge nur teilweise aufgefangenen Verteilgutes sowohl aus wirtschaftlichen Gründen als auch aus Umweltschutzgründen zu vermeiden.

In der Praxis ist die Durchführung von Abdrehproben daher insbesondere dann, wenn die Verteilmaschine eine Mehrzahl an Verteilerleitungen aufweist, welchen jeweils eine eigene Übergabekammer zugeordnet ist, nur bei einigen Übergabekammern möglich, wobei die jeweilige Übergabekammer in mehr oder minder aufwändiger Weise teilweise demontiert werden muss, um das anlässlich der Abdrehprobe dosierte Verteilgut mittels eines Abdrehproben-Sammelbehälters auffangen zu können. Sofern mehrere Übergabekammern mit zur Durchführung von Abdrehproben vorgesehenen Entnahmeöffnungen ausgestattet sind, müssen deren Verschlussorgane für jede Überkammer einzeln geöffnet und nach der Abdrehprobe wieder verschlossen werden, was sich in handhabungstechnischer Hinsicht gleichfalls als mühsam und aufwändig erweist. Schließlich muss oftmals auch der Abdrehproben-Sammelbehälter manuell unterhalb der jeweiligen Entnahmeöffnung festgehalten werden, was insbesondere auch im Hinblick auf die in der Regel schwere Zugänglichkeit der Übergabekammern die Gefahr birgt, dass das während der Abdrehprobe dosierte Verteilgutes nicht vollständig aufgefangen wird.

Der Erfindung liegt die Aufgabe zugrunde, eine pneumatische Verteilmaschine der eingangs genannten Art unter zumindest weitestgehender Vermeidung der vorgenannten Nachteile und insbesondere unter zuverlässiger Verhinderung von Abdrehfehlern dahingehend weiterzubilden, um in konstruktiver Hinsicht auf einfache und kostengünstige Weise sicherzustellen, dass Abdrehproben bei einer Mehrzahl an Übergabekammern zugleich durchgeführt werden können.

Erfindungsgemäß wird diese Aufgabe bei einer pneumatischen Verteilmaschine der eingangs genannten Art dadurch gelöst, dass jeweils ein Bodenabschnitt einer jeweiligen Übergabekammer um eine gemeinsame, im Wesentlichen senkrecht zur Erstreckungsrichtung einer jeweiligen Förderleitung angeordnete Schwenkachse zwischen einer Schließstellung, in welcher der jeweilige Bodenabschnitt die jeweilige Übergabekammer verschließt, und einer Öffnungsstellung, in welcher der jeweilige Bodenabschnitt je einen Öffnungsquerschnitt einer jeweiligen Übergabekammer freigibt und außerhalb des jeweiligen Öffnungsquerschnittes angeordnet ist, schwenkbar ist.

Die erfindungsgemäße Ausgestaltung sieht folglich bei einer jeweiligen Übergabekammer der Verteilmaschine einen jeweiligen schwenkbaren Bodenabschnittes vor, wobei die Bodenabschnitte der Übergabekammern um eine gemeinsame Schwenkachse zwischen ihrer Schließstellung und ihrer Öffnungsstellung verschwenkbar sind, um bei allen Übergabekammern gemeinsam Abdrehproben nehmen zu können. Aufgrund der in Bezug auf die Förderrichtung bzw. auf die Erstreckungsrichtung einer jeweiligen Förderleitung etwa senkrecht angeordneten Schwenkachse der Bodenabschnitte sind die Übergabekammern bei geöffneten Bodenabschnitten gut zugänglich, um das in alle Übergabekammern dosierte Verteilgut mittels eines Abdrehproben-Sammelbehälters auffangen zu können. Darüber hinaus ergibt sich somit ein modularer Aufbau der Übergabekammern einschließlich deren schwenkbaren Bodenabschnitten, welche je nach Bauart der Verteilmaschine bzw. deren Dosierorgane in unterschiedlicher Anzahl nebeneinander montiert werden können, ohne den konstruktiven Aufbau einer jeweiligen Übergabekammer einschließlich ihres schwenkbaren Bodenabschnittes verändern zu müssen.

Die gemeinsame Schwenkachse der Bodenabschnitte der Übergabekammern kann beispielsweise von einer unterhalb der Förderleitungen angeordneten Welle gebildet sein, wobei die Welle z.B. einstückig ausgestaltet und unterhalb der Übergabekammern gelagert oder auch im Wesentlichen drehfest montiert sein kann, oder die Welle kann z.B. auch aus einer Mehrzahl an koaxialen Wellenstummeln zusammengesetzt sein, welche ihrerseits unterhalb einer jeweiligen Übergabekammer gelagert oder auch drehfest montiert sind, um einen jeweiligen schwenkbaren Bodenabschnitt zwischen zwei entgegengesetzten Wellenstummeln lagern zu können.

Wie eingangs erwähnt, sind die Übergabekammern gattungsgemäßer pneumatischer Verteilmaschinen häufig mit Injektoren ausgestattet, welche jeweils eine Düse und/oder einen Diffusor aufweisen, um das mittels des Dosierorgans dosierte Verteilgut der jeweiligen Förderleitung aufzugeben und dort möglichst gleichmäßig zu fluidisieren. Sofern die Übergabekammern einer erfindungsgemäßen Verteilmaschine mit solchen Injektoren ausgestattet sind, kann vorzugsweise vorgesehen sein, dass die Düse und/oder der Diffusor eines jeweiligen Injektors an dem jeweiligen schwenkbaren Bodenabschnitt einer jeweiligen Übergabekammer befestigt sind, so dass der jeweilige Injektor anlässlich der Durchführung einer Abdrehprobe gemeinsam mit dem jeweiligen schwenkbaren Bodenabschnitt aus der jeweiligen Übergabekammer heraus verschwenkt wird, wenn der schwenkbare Bodenabschnitt von seiner Schließstellung in seine Öffnungsstellung verschwenkt wird. Auf diese Weise wird verhindert, dass während der Abdrehprobe dosiertes Verteilgut nicht versehentlich in Teilen des Injektors zurückgehalten wird, sondern das gesamte Verteilgut mittels eines geeigneten Abdrehproben-Sammelbehälters sicher aufgefangen werden kann.

Um für eine sehr einfache und bequeme Handhabbarkeit anlässlich der Durchführung von Abdrehproben zu sorgen, sind die schwenkbaren Bodenabschnitte zumindest einiger, insbesondere aller, Übergabekammern, welche einem jeweiligen Dosierorgan nachgeordnet sind, vorzugsweise gemeinsam betätigbar, um sie gemeinsam zwischen ihrer Schließstellung und ihrer Öffnungsstellung zu verschwenken.

In konstruktiver Hinsicht kann zu diesem Zweck vorteilhafterweise vorgesehen sein, dass die schwenkbaren Bodenabschnitte der Übergabekammern mittels einer im Wesentlichen parallel zu der gemeinsamen Schwenkachse der Bodenabschnitte und mit radialem Abstand hiervon angeordneten Verbindungswelle miteinander verbunden sind. Die Verbindungswelle, welche beispielsweise fluchtende Bohrungen der schwenkbaren Bodenabschnitte der Übergabekammern durchsetzt und auf diese Weise, insbesondere drehbar, an den schwenkbaren Bodenabschnitten gelagert ist, dient hierbei vornehmlich zur Synchronisierung der Schwenkbewegung der Bodenabschnitte, um hiermit die Öffnungsquerschnitte der Übergabekammern gemeinsam öffnen und schließen zu können.

An der Verbindungswelle der schwenkbaren Bodenabschnitte der Übergabekammern kann vorzugsweise eine Arretiereinrichtung drehfest befestigt sein, um die in ihrer Schließstellung befindlichen schwenkbaren Bodenabschnitte durch Drehen der Verbindungswelle gemeinsam zu arretieren bzw. zu lösen. Auf diese Weise lassen sich die mittels der Verbindungswelle gekoppelten schwenkbaren Bodenabschnitte nicht nur synchron um die gemeinsame Schwenkachse verschwenken, um die Öffnungsquerschnitte der Übergabekammern anlässlich der Durchführung einer Abdrehprobe gemeinsam freizugeben bzw. danach wieder zu verschließen, sondern die schwenkbaren Bodenabschnitte lassen sich ihrer Schließstellung auch gemeinsam arretieren bzw. lösen, indem die Verbindungswelle in die eine bzw. in die andere Richtung gedreht wird.

Die Arretiereinrichtung kann beispielsweise wenigstens einen drehfest an der Verbindungswelle der schwenkbaren Bodenabschnitte befestigten Haken aufweist, welcher durch Drehen der Verbindungswelle in bzw. außer Eingriff mit wenigstens einem hierzu komplementären, stationär angeordneten Eingriffsmittel, wie beispielsweise einem mit dem Haken zusammenwirkenden Stift oder dergleichen, bringbar ist, wobei das Eingriffsmittel z.B. an dem Gehäuse zumindest einer der Übergabekammern oder auch am Rahmen der Verteilmaschine festgelegt sein kann.

Darüber hinaus kann in vorteilhafter Ausgestaltung vorgesehen sein, dass an der Verbindungswelle der schwenkbaren Bodenabschnitte der Übergabekammern eine Handhabe, insbesondere in Form eines Hebels, angeordnet ist, um die schwenkbaren Bodenabschnitte mittels des Hebels auf einfache Weise gemeinsam zwischen ihrer Schließstellung und ihrer Öffnungsstellung zu verschwenken.

Die Handhabe kann dabei vorteilhafterweise drehfest an der Verbindungswelle der schwenkbaren Bodenabschnitte der Übergabekammern befestigt sein, um die in ihrer Schließstellung befindlichen schwenkbaren Bodenabschnitte durch Drehen der Handhabe und somit der mit der Verbindungswelle drehfest verbundenen Arretiereinrichtung gemeinsam zu arretieren bzw. zu lösen, d.h. die Handhabe dient in diesem Fall einerseits zum Arretieren bzw. Lösen der in der Schließstellung befindlichen schwenkbaren Bodenabschnitte der Übergabekammern, wenn die Verbindungswelle mittels der Handhabe in die eine bzw. in die andere Richtung gedreht wird, andererseits dient die Handhabe zum einfachen gemeinsamen Verschwenken der Bodenabschnitte zwischen ihrer Schließstellung und ihrer Öffnungsstellung.

Darüber hinaus kann vorgesehen sein, dass der Handhabe ein Schnellverschluss zugeordnet ist, um die Handhabe zumindest in der Schließstellung der schwenkbaren Bodenabschnitte der Übergabekammern zu blockieren bzw. freizugeben. Der Schnellverschluss kann in als solcher beliebig bekannter Weise ausgestaltet sein, wie beispielsweise in Form einer Drucktaste, bei deren Betätigung sich die Handhabe bewegen lässt - sei es zur Betätigung der Arretiereinrichtung der schwenkbaren Bodenabschnitte der Übergabekammern und/oder sei es zu deren Überführung zwischen der Öffnungs- und Schließstellung -, andernfalls eine Bewegung der Handhabe blockiert wird.

In weiterhin vorteilhafter Ausgestaltung kann vorgesehen sein, dass den schwenkbaren Bodenabschnitten der Übergabekammern wenigstens eine Rasteinrichtung zugeordnet ist, welche zum Halten der schwenkbaren Bodenabschnitte in deren Öffnungsstellung ausgebildet ist, so dass die in ihrer Öffnungsstellung befindlichen schwenkbaren Bodenabschnitte während der Durchführung einer Abdrehprobe in ihrer Öffnungsstellung arretiert werden und nicht Gefahr laufen, unbeabsichtigterweise zumindest teilweise in Richtung ihrer Schließstellung zurück verschwenkt zu werden.

Eine solche Rasteinrichtung kann grundsätzlich in beliebiger bekannter Weise ausgestaltet sein und beispielsweise wenigstens ein, insbesondere elastisch nachgiebiges und beispielsweise aus Gummi, Silikon oder anderen Elastomeren gefertigtes Rastelement aufweist, welches mit einem Fortsatz eines jeweiligen schwenkbaren Bodenabschnittes der Übergabekammern in Eingriff bringbar ist, wenn sich der schwenkbare Bodenabschnitt in der Öffnungsstellung befindet.

Gemäß einer vorteilhaften Weiterbildung kann vorgesehen sein, dass unterhalb der mittels eines jeweiligen schwenkbaren Bodenabschnittes verschließbaren Öffnungsquerschnitte der Übergabekammern eine Halteeinrichtung angeordnet ist, welche zur lösbaren Halterung eines in einen Bauraum unterhalb der schwenkbaren Bodenabschnitte einbringbaren Abdrehproben-Sammelbehälters ausgebildet ist. Letzterer muss demnach während der Durchführung einer Abdrehprobe nicht mühsam festgehalten oder auf dem Boden abgestellt werden, sondern kann an der Halteeinrichtung lösbar fixiert werden, um sicherzustellen, dass das gesamte, anlässlich der Abdrehprobe dosierte Verteilgut sicher in den Abdrehprobe-Sammelbehälter überführt wird.

Die Halteeinrichtung kann vorzugsweise wenigstens eine, insbesondere zwei, zweckmäßigerweise sich parallel zueinander erstreckende, Führungsschienen umfassen, welche sich im Wesentlichen parallel zu der gemeinsamen Schwenkachse der schwenkbaren Bodenabschnitte der Übergabekammern erstreckt bzw. erstrecken, wobei die Führungsschiene(n) zum Tragen des Abdrehproben-Sammelbehälters sowie zum Einführen und Ausziehen desselben in den bzw. aus dem Bauraum unterhalb der schwenkbaren Bodenabschnitte (17) ausgebildet ist bzw. sind. Auf diese Weise lässt sich ein Abdrehproben-Sammelbehälter anlässlich der Durchführung einer Abdrehprobe nicht nur in einfacher Weise in der vorgesehenen Auffangposition des dosierten Verteilgutes positionieren, sondern es wird auch ein einfaches Einführen bzw. Ausziehen des Abdrehproben-Sammelbehälters in den üblicherweise sehr beengten und schwer zugänglichen Bauraum unterhalb der Übergabekammern gewährleistet, indem der Abdrehproben-Sammelbehälter entlang der Schiene(n) geführt werden kann.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine schematische perspektivische Ansicht einer Ausführungsform einer pneumatischen Verteilmaschine zum Ausbringen von Verteilgut in Form eines als Nachläufer ausgestalteten Pneumatikstreuers für landwirtschaftliche Zwecke;
- Fig. 2: eine schematische perspektivische Detailansicht der Verteilmaschine gemäß Fig. 1 im Bereich zwei ihrer Dosierorgane;
- Fig. 3: eine schematische perspektivische Detailansicht einer Mehrzahl an Förderleitungen im Bereich der jeweils mit einem schwenkbaren Bodenabschnitt versehenen Übergabekammern, wie sie bei einer Verteilmaschine der Fig. 1 und 2 zum Einsatz gelangen können, wobei sich die schwenkbaren Bodenabschnitte in ihrer Schließstellung befinden;
- Fig. 4: eine schematische Seitenansicht der mit je einem schwenkbaren Bodenabschnitt versehenen Übergabekammern gemäß Fig. 3, wobei die schwenkbaren Bodenabschnitte mittels einer Arretiereinrichtung in ihrer Schließstellung arretiert sind, wobei die Handhabe zu Veranschaulichungszwecken der Arretiereinrichtung weggelassen worden ist;
- Fig. 5: eine der Fig. 4 entsprechende schematische Seitenansicht, nachdem die Arretiereinrichtung in eine Position bewegt worden ist, in welcher die nach wie vor in ihrer Schließstellung befindlichen schwenkbaren Bodenabschnitte gelöst worden und nunmehr um ihre gemeinsame Schwenkachse in ihre Öffnungsstellung verschwenkt werden können;
- Fig. 6: eine im Wesentlichen der Fig. 3 entsprechende schematische perspektivische Detailansicht der Mehrzahl an Förderleitungen im Bereich der jeweils mit einem schwenkbaren Bodenabschnitt versehenen Übergabekammern, wobei sich die schwenkbaren Bodenabschnitte in ihrer Öffnungsstellung befinden, in welcher ein jeweiliger Öffnungsquerschnitt der Übergabekammern freigegeben ist und die Durchführung einer Abdrehprobe ermöglicht;
- Fig. 7: eine im Wesentlichen der Fig. 4 entsprechende schematische Seitenansicht der mit den schwenkbaren Bodenabschnitten versehenen Übergabekammern gemäß Fig. 6, wobei sich die schwenkbaren Bodenabschnitte in ihrer Öffnungsstellung entsprechend der Fig. 6 befinden;
- Fig. 8: eine schematische Schnittansicht von mit einem Injektor ausgestatteten Übergabekammern ähnlich der Seitenansicht der Fig. 7, wobei sich die schwenkbaren Bodenabschnitte in ihrer Öffnungsposition befinden;
- Fig. 9: eine schematische Schnittansicht der mit einem Injektor ausgestatteten Übergabekammern gemäß Fig. 8, wobei sich die schwenkbaren Bodenabschnitte in ihrer Schließstellung entsprechend den Fig. 3 bis 5 befinden;
- Fig. 10: eine schematische perspektivische Detailansicht eines mit einem Injektor ausgestatteten schwenkbaren Bodenabschnittes der Übergabekammern gemäß Fig. 8 und 9;
- Fig. 11: eine der Fig. 6 entsprechende schematische perspektivische Detailansicht der Mehrzahl an Förderleitungen im Bereich der jeweils mit einem schwenkbaren Bodenabschnitt versehenen Übergabekammern, wobei sich die schwenkbaren Bodenabschnitte in ihrer Öffnungsstellung befinden, in einer Situation, in welcher ein Abdrehproben-Sammelbehälter in den Bauraum unterhalb der Übergabekammern eingeführt wird, um eine Abdrehprobe durchzuführen;
- Fig. 12: eine im Wesentlichen den Fig. 4, 7 und 8 entsprechende schematische Seitenansicht der mit den schwenkbaren Bodenabschnitten versehenen Übergabekammern gemäß Fig. 11, wobei sich die schwenkbaren Bodenabschnitte in ihrer Öffnungsstellung entsprechend den Fig. 6 bis 8 befinden, mit dem Abdrehproben-Sammelbehälter der Fig. 11; und
- Fig. 13: eine schematische perspektivische Explosionsdarstellung einer Mehrzahl an Förderleitungen im Bereich der jeweils mit einem schwenkbaren Bodenabschnitt versehenen Übergabekammern.

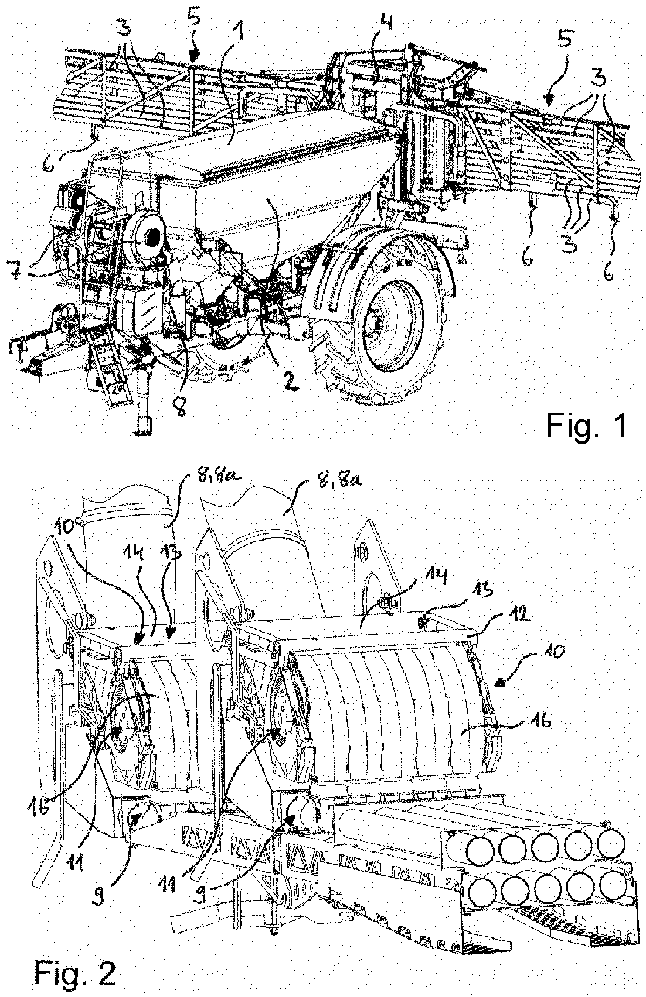

In der Fig. 1 ist ein Ausführungsbeispiel einer pneumatischen Verteilmaschine in Form eines von einer Zugmaschine, wie einem Traktor (nicht gezeigt), gezogenen einachsigen Nachläufers exemplarisch wiedergegeben, welche als Pneumatikstreuer für pulver- oder partikelförmiges Verteilgut, wie Dünger und/oder Saatgut, ausgebildet ist. Die Verteilmaschine weist einen, im vorliegenden Fall z.B. mit einer Überdachung 1 versehenen, von einem Tragrahmen aufgenommenen Vorratsbehälter 2 zur Aufnahme des Verteilgutes auf, dessen seitlichen, vorderen und rückwärtigen Wände sich im unteren Bereich nach innen zu wenigstens einer Bodenmulde verjüngen, welche in der Fig. 1 nicht erkennbare Auslassöffnungen aufweist, welchen jeweils ein Dosierorgan (vgl. das Bezugszeichen 10 der Fig. 2) nachgeordnet ist. Dabei können z.B. jeweils eins, zwei, drei oder auch mehrere Auslassöffnungen an jeder Längsseite des unteren Bereiches des Vorratsbehälters 2 vorgesehen sein, welche mit jeweils einem Dosierorgan 10 versehen sind.

Die in der Fig. 1 nicht im Einzelnen erkennbaren Dosierorgane 10 sind beispielsweise in unterschiedlicher Höhe angeordnet und versorgen jeweils eine Mehrzahl an Förderleitungen 3 mit dem dosierten Verteilgut, wobei die Förderleitungen 3 jeweils zu Paketen zusammengefasst sind und zunächst nach hinten zu einem Hubrahmen 4 geführt und sodann nach außen umgelenkt sind. Zu diesem Zweck nimmt der Hubrahmen 4 zwei (abgebrochen dargestellte) Ausleger 5 auf, welche sich in ihrer in der Fig. 1 dargestellten Betriebsstellung zu beiden Seiten im Wesentlichen senkrecht zur Fahrtrichtung der Verteilmaschine erstrecken. Jeder Ausleger 5 ist dabei schwenkbar an dem Hubrahmen 4 angelenkt und zweckmäßigerweise mehrgelenkig ausgeführt, so dass einzelne Auslegerabschnitte gemeinsam mit den Förderleitungen 3 aus der nach außen gestreckten Betriebsstellung gemäß der Fig. 1 in eine zusammengeklappte Ruhe- bzw. Transportposition angeklappt werden können (nicht zeichnerisch wiedergegeben). Die von den Auslegern 5 aufgenommenen Förderleitungen 3 enden in unterschiedlichen Abständen von der Längsachse der Verteilmaschine an Verteilorganen 6, welche sich beispielsweise an einen endständigen Krümmer einer jeweiligen Förderleitung 3 anschließen und als Prallorgane, z.B. in Form von Pralltellern bzw. Prallplatten, ausgestaltet sind, um den aus den Förderleitungen 3 austretenden Verteilgutstrom in jeweils nebeneinander angeordnete Flächenbereiche auf dem Boden zu verteilen.

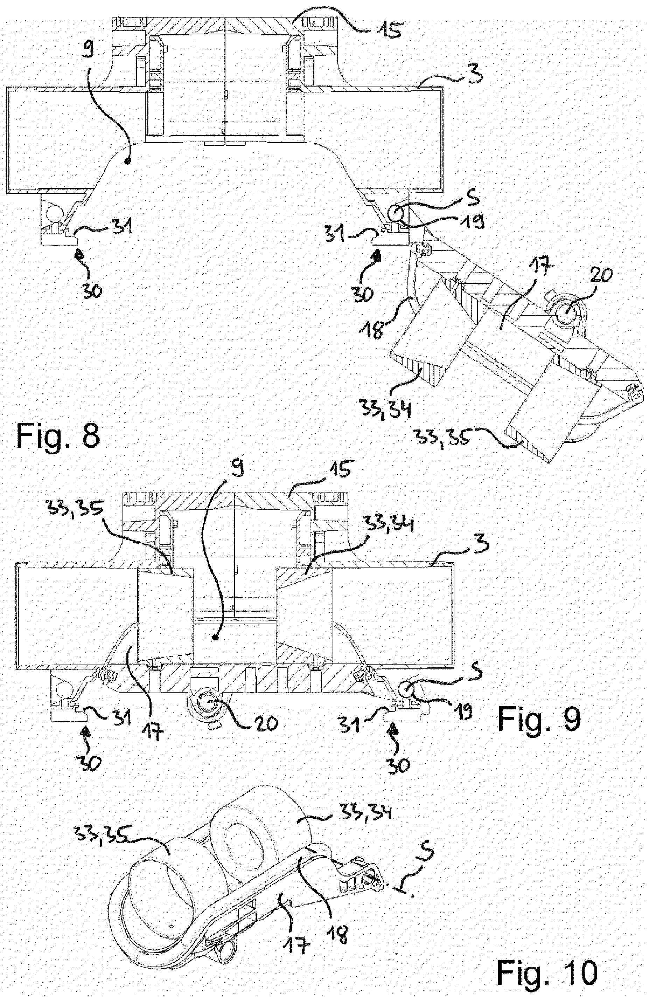

Wie weiterhin der Fig. 1 und insbesondere auch der Fig. 2 zu entnehmen ist, sind vor der - in Fahrtrichtung F betrachtet - vorderen Stirnwand des Vorratsbehälters 2 zwei Gebläse 7 angeordnet, welche zur Erzeugung eines Luftförderstromes zum Transport des mittels der Dosierorgane 10 dosierten Verteilgutes durch die Förderleitungen 3 dienen und aus Platzgründen beispielsweise mit ihrer Achse quer zur Fahrtrichtung F angeordnet sind. Die Druckleitungen 8 eines jeden Gebläses 7 weisen je einen, einem jeden Dosierorgan 10 zugeordneten Abgang 8a auf (vgl. die Fig. 2), welcher stromauf eines jeweiligen Dosierorgans 10 an einen jeweiligen, in den Fig. 1 und 2 nicht erkennbaren Luftverteiler mündet, um die Druckluft auf die einem jeden Dosierorgan 10 zugeordnete Anzahl an Förderleitungen 3 aufzuteilen. Unmittelbar stromab eines jeden Luftverteilers ist jeder Förderleitung 3 eine Übergabekammer 9 (vgl. die Fig. 2) zugeordnet, welche mit einem eine Düse 34 und einen Diffusor 35 umfassenden Injektor 33 (vgl. die Fig. 8 bis 10) ausgestattet sein kann und in welche das dosierte Verteilgut von dem jeweiligen Dosierorgan 10 übergeben wird.

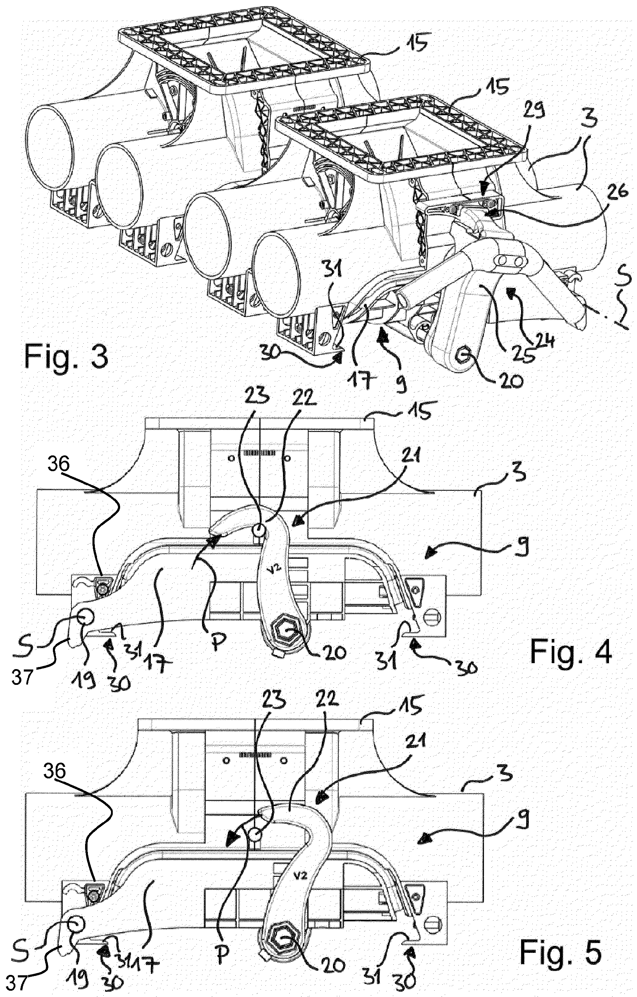

Die Fig. 2 zeigt eine Detailansicht der pneumatischen Verteilmaschine im Bereich zwei ihrer Dosierorgane 10, welche jeweils eine rotierbar angetriebene Dosierwalze 11 zur Dosierung des Verteilgutes aufweisen, die je nach Art des Verteilgutes beispielsweise nach Art einer Nockenwalze, einer Zellenradwalze oder dergleichen ausgestaltet sein kann. Jedes Dosierorgan 10 versorgt dabei eine Mehrzahl an Förderleitungen 3 und umfasst ein Dosiergehäuse 12, in welchem die um eine im vorliegenden Fall etwa horizontale Drehachse rotierbar angetriebene Dosierwalze 11 gelagert ist und welches unterhalb einer jeweiligen Auslassöffnung des Vorratsbehälters 2 angeordnet ist (siehe oben) und das Verteilgut bis an die Oberfläche der Dosierwalze 11 zu leiten vermag. Zu diesem Zweck verfügt das Dosiergehäuse 12 eines jeweiligen Dosierorgans 10 einerseits über einen mit einer jeweiligen Auslassöffnung des Vorratsbehälters 2 kommunizierenden, z.B. unmittelbar unterhalb einer jeweiligen Auslauföffnung angeordneten Dosiereinlass 13, welcher beispielsweise einen Einlauftrichter 14 umfasst. Andererseits verfügt das Dosiergehäuse 12 eines jeweiligen Dosierorgans 10 über einen oder mehrere - in Rotationsrichtung der Dosierwalze 101 betrachtet - stromab des Dosiereinlasses 13 angeordnete(n) Dosierauslass bzw. Dosierauslässe 15 (vgl. insbesondere die Fig. 3 ff), welche mit je einer oder mehreren - hier zwei - Übergabekammern 9 einer jeweiligen Förderleitung 3 kommunizieren und ihrerseits z.B. unmittelbar oberhalb derselben angeordnet sind. Darüber hinaus kann ein jeweiliges Dosierorgan 10 z.B. mit einer Abdeckung 16 ausgestattet sein, welche sich zumindest über den Dosierauslass 15 bis - wiederum in Rotationsrichtung der Dosierwalze 11 betrachtet - hin zu dem Einlauftrichter 14 des Dosiereinlasses 13 erstreckt. Die Dosierorgane 10 können beispielsweise jeweils eine einzige, gesteuert bzw. geregelt drehangetriebene Dosierwalze 11 umfassen, oder sie können insbesondere mit je einer Dosierwalze 11 ausgestattet sein, welche ein Mehrzahl an unabhängig voneinander gesteuert bzw. geregelt drehangetriebenen Dosierradsegmenten aufweist, wobei ein jeweiliges Dosierradsegment z.B. eine einzige oder ein Paar von Übergabekammern 9 versorgen kann, um für eine sehr feine Teilbreitenschaltung zu sorgen (vgl. hierzu auf die eingangs zitierte WO 2018/219489 A1).

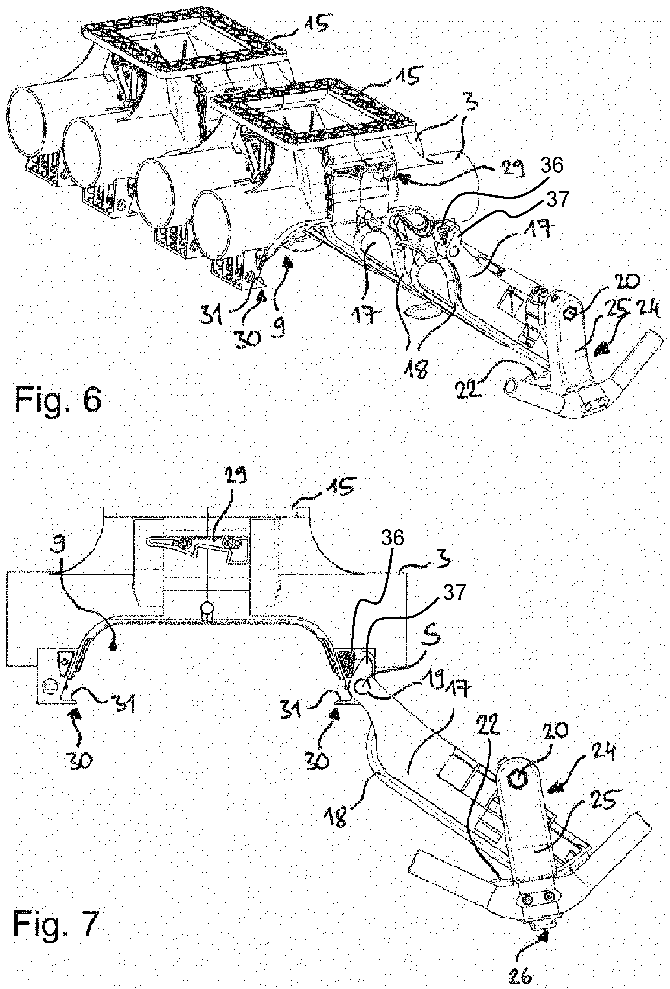

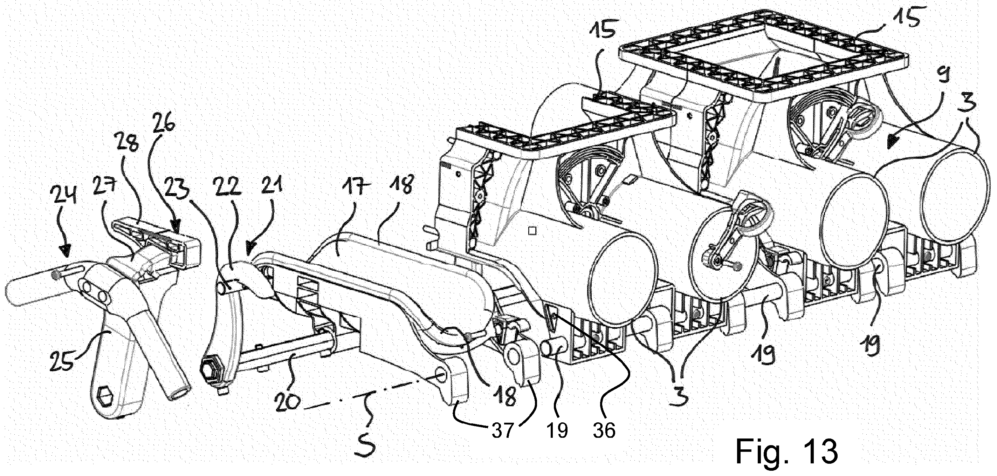

In den Fig. 3 bis 13 sind verschiedene Ansichten einiger, in im Wesentlichen parallelen Rohrbündeln geführter Förderleitungen 3 der pneumatischen Verteilmaschine im Bereich deren Übergabekammern 9 schematisch wiedergegeben. Wie hieraus ersichtlich, sind die Übergabekammern 9 an einem bodenseitigen Umfangsabschnitt der entsprechenden Förderleitungen 3 mit je einem Bodenabschnitt 17 versehen, wobei die Bodenabschnitte 17 einer jeweiligen Übergabekammer 9 um eine gemeinsame, im Wesentlichen senkrecht zur Erstreckungsrichtung einer jeweiligen Förderleitung 3 - also im Wesentlichen senkrecht zur Förderrichtung des Verteilgutes sowie etwa horizontal - angeordnete Schwenkachse S zwischen einer Schließstellung, in welcher der jeweilige Bodenabschnitt 17 die jeweilige Übergabekammer 9 verschließt (vgl. die Fig. 3 bis 5 und 9), und einer Öffnungsstellung, in welcher der jeweilige Bodenabschnitt 17 je einen Öffnungsquerschnitt einer jeweiligen Übergabekammer 9 freigibt und außerhalb des jeweiligen Öffnungsquerschnittes angeordnet ist (vgl. die Fig. 6 bis 8, 11 und 12), schwenkbar ist. Die schwenkbaren Bodenabschnitte 17 erstrecken sich dabei vorzugsweise über mindestens etwa 180° des bodenseitigen Umfangs einer jeweiligen Übergabekammer 9, damit bei der Durchführung von Abdrehproben, wenn sich die schwenkbaren Bodenabschnitte 17 in ihrer Öffnungsstellung gemäß den Fig. 6 bis 8, 11 und 12 befinden, sichergestellt ist, dass keine Anteile des dosierten Verteilgutes in das Innere der Übergabekammern 9 gelangen und zurückgehalten werden. Die schwenkbaren Bodenabschnitte 17 können ferner zweckmäßigerweise mit je einer Umfangsdichtung 18 ausgestattet sein, welche in der Schließstellung der Bodenabschnitte 17 gemäß den Fig. 3 bis 5 und 9 gegen den stationären oberen Abschnitt einer jeweiligen Übergabekammer 9 zur dichtenden Anlage gelangt (siehe insbesondere in der Detailansicht der Fig. 10 sowie in der Explosionsdarstellung der Fig. 13, dort den freigeschnittenen Bodenabschnitt 17 links). Die gemeinsame Schwenkachse S der schwenkbaren Bodenabschnitte 17 der Übergabekammern 9 ist im vorliegenden Ausführungsbeispiel von einer unterhalb der Förderleitungen 3 bzw. deren Übergabekammern 9 angeordneten Welle 19 gebildet, welche z.B. einstückig ausgestaltet oder auch aus einer Mehrzahl an koaxialen Wellenstummeln zusammengesetzt sein kann. Die die gemeinsame Schwenkachse S der Bodenabschnitte 17 bildende Welle 19 kann unterhalb einer jeweiligen Übergabekammer 9 gelagert oder - wie im vorliegenden Fall - drehfest montiert sein, wobei ein jeweiliger schwenkbarer Bodenabschnitt 17 auf der Welle 19 gelagert ist.

Wie aus den Fig. 8 bis 10 hervorgeht, sind die Übergabekammern 9 zweckmäßigerweise mit Injektoren 33 ausgestattet, welche jeweils eine Düse 34 mit einem sich in Förderrichtung des Verteilgutes verjüngenden Innenquerschnitt und einen Diffusor 35 mit einem sich in Förderrichtung des Verteilgutes erweiternden Innenquerschnitt aufweisen. Die Düse 34 und der Diffusor 35 eines jeweiligen Injektors 33 sind bei dem vorliegenden Ausführungsbeispiel an einem jeweiligen schwenkbaren Bodenabschnitt 17 einer jeweiligen Übergabekammer 9 lösbar befestigt, wie beispielsweise verschraubt, so dass der Injektor 33 vollständig aus der Übergabekammer 9 heraus verschwenkt ist, wenn sich der schwenkbare Bodenabschnitt 17 in seiner Öffnungsposition gemäß der Fig. 8 befindet, wohingegen der Injektor 33 automatisch in seiner vorgesehenen Position im Innern der Übergabekammer 9 angeordnet ist, wenn sich der schwenkbare Bodenabschnitt 17 in seiner Schließposition gemäß der Fig. 9 befindet.

Um die schwenkbaren Bodenabschnitte 17 der Übergabekammern 9, welche einem jeweiligen Dosierorgan 10 nachgeordnet sind, gemeinsam zu betätigen und sie gemeinsam zwischen ihrer Schließstellung und ihrer Öffnungsstellung zu verschwenken, sind die schwenkbaren Bodenabschnitte 17 der Übergabekammern 9 bei dem zeichnerisch wiedergegebenen Ausführungsbeispiel mittels einer im Wesentlichen parallel zu der gemeinsamen Schwenkachse S der Bodenabschnitte 17 und mit radialem Abstand hiervon angeordneten Verbindungswelle 20 miteinander verbunden, welche z.B. in fluchtenden Bohrungen der schwenkbaren Bodenabschnitte 19 der Übergabekammern 9 gelagert ist (vgl. insbesondere die Fig. 13) und Schwenkbewegungen der Bodenabschnitte 17 synchronisiert, um auf diese Weise die Öffnungsquerschnitte der Übergabekammern 9 gemeinsam öffnen und schließen zu können. An der Verbindungswelle 20 der schwenkbaren Bodenabschnitte 17 ist eine am besten in den Fig. 4, 5 und 13 erkennbare Arretiereinrichtung 21 drehfest befestigt ist, um die in ihrer Schließstellung gemäß den Fig. 3 bis 5 und 9 befindlichen schwenkbaren Bodenabschnitte 17 durch Drehen der Verbindungswelle 20 gemeinsam zu arretieren bzw. zu lösen. Die Arretiereinrichtung 21 umfasst im vorliegenden Fall einen oder mehrere Haken 22, welcher durch Drehen der Verbindungswelle 20 in Richtung der Pfeile P der Fig. 4 und 5 in bzw. außer Eingriff mit einem oder mehreren, hierzu komplementären, stationär an der Außenseite einer oder mehrerer Übergabekammern 9 oder am Rahmen der Verteilmaschine angeordneten Eingriffsmittel 23, wie in Form eines mit dem Haken zusammenwirkenden Stiftes oder dergleichen, in bzw. außer Eingriff bringbar ist. Zur drehfesten Befestigung des Hakens 22 der Arretiereinrichtung 21 auf der Verbindungswelle 21 kann letztere beispielsweise einen nicht runden Außenquerschnitt, z.B. in Form eines Mehrkantprofils, besitzen, wobei der nicht runde Außenquerschnitt der Verbindungswelle 20 in eine Bohrung mit einem hierzu komplementären, nicht runden Innenquerschnitt des auf der Verbindungswelle 20 sitzenden Hakens 22 eingreift (vgl. insbesondere die Fig. 13).

An der Verbindungswelle 20 der schwenkbaren Bodenabschnitte 17 der Übergabekammern 9 ist beim gezeigten Ausführungsbeispiel ferner eine Handhabe 24 - hier im Wesentlichen in Form eines Hebels 25 - drehfest befestigt, was z.B. dadurch geschehen kann, dass der Hebel 25 der Handhabe 24 entsprechend dem Haken 22 der Arretiereinrichtung 21 eine Bohrung mit einem zu dem nicht runden Außenquerschnitt der Verbindungswelle 20 komplementären, nicht runden Innenquerschnitt aufweist, mit welcher die Verbindungswelle 20 im Eingriff steht (vgl. wiederum insbesondere die Fig. 4, 5 und 13). Die insbesondere in den Fig. 3, 6, 7, 12 und 13 erkennbare Handhabe 24 dient einerseits zum einfachen manuellen gemeinsamen Verschwenken der Bodenabschnitte 17 der Übergabekammern 9 zwischen ihrer Schließstellung und ihrer Öffnungsstellung, andererseits zum einfachen manuellen gemeinsamen Arretieren bzw. Lösen der Haken 22 der Arretiereinrichtung 21, wenn sich die schwenkbaren Bodenabschnitte 17 in ihrer Schließstellung gemäß den Fig. 3 bis 5 und 9 befinden, indem der Hebel 23 der Handhabe 24 entsprechend der Pfeile P der Fig. 4 und 5 in Umfangsrichtung der Verbindungswelle 20 gedreht wird. Der Handhabe 22 kann zudem ein Schnellverschluss 26 zugeordnet sein, um sie in der Schließstellung der schwenkbaren Bodenabschnitte 17 der Übergabekammern 9 gemäß den Fig. 3 bis 5 und 9 zu blockieren bzw. freizugeben, wobei der Schnellverschluss 26 bei dem zeichnerisch dargestellten Ausführungsbeispiel eine Drucktaste 27 umfasst, bei deren Betätigung sich die Handhabe 22 bewegen lässt, andernfalls eine Bewegung der Handhabe 22 blockiert wird (vgl. insbesondere die Fig. 13). In konstruktiver Hinsicht kann dies beispielsweise dadurch gewährleistet sein, dass die insbesondere in die Blockierstellung mechanisch, z.B. mittels einer Feder (nicht zeichnerisch erkennbar), vorbelastete Drucktaste 27 mit einem Rastkörper 28 in Verbindung steht, welcher im blockierten Zustand des Schnellverschlusses 26 mit einer hierzu komplementären Raststruktur 29 an der Außenseite einer Übergabekammer 9 oder am Rahmen der Verteilmaschine (vgl. hierzu die Fig. 3, 6 und 7 sowie 11 und 12) im Eingriff steht, wohingegen der Rastkörper 28 des Schnellverschlusses 26 bei gedrückter Drucktaste 27 mit der Raststruktur 29 außer Eingriff gebracht werden kann, um die Handhabe 22 sowohl rotatorisch (zum Lösen bzw. Arretieren der Arretiereinrichtung 21) als auch translatorisch (zum Öffnen bzw. Schließen der schwenkbaren Bodenabschnitte 27) bewegen zu können.

Wie insbesondere den Fig. 4 bis 7, 12 und 13 zu entnehmen ist, ist den schwenkbaren Bodenabschnitten 17 der Übergabekammern 9 ferner je eine Rasteinrichtung 36 zugeordnet, welche zum Halten der schwenkbaren Bodenabschnitte 17 in deren Öffnungsstellung gemäß den Fig. 6 bis 8, 11 und 12 ausgebildet ist. Die Rasteinrichtung 36 umfasst bei dem zeichnerisch wiedergegebenen Ausführungsbeispiel ein elastisch nachgiebiges und z.B. aus Gummi, Silikon oder anderen Elastomeren gefertigtes Rastelement nach Art eines elastischen Formkörpers, welches mit einem etwa hebelförmigen und sich mit radialer Erstreckungsrichtungskomponente von der Schwenkachse S fort erstreckenden Fortsatz 37 eines jeweiligen schwenkbaren Bodenabschnittes 17 der Übergabekammern 9 in Eingriff bringbar ist, wenn sich der schwenkbare Bodenabschnitt 17 in seiner Öffnungsstellung befindet. Auf diese Weise werden die in ihrer Öffnungsstellung befindlichen schwenkbaren Bodenabschnitte 19 während der Durchführung von Abdrehproben in ihrer Öffnungsstellung arretiert, ohne dass die Gefahr besteht, dass sie versehentlich zumindest teilweise in Richtung ihrer Schließstellung zurück verschwenkt werden.

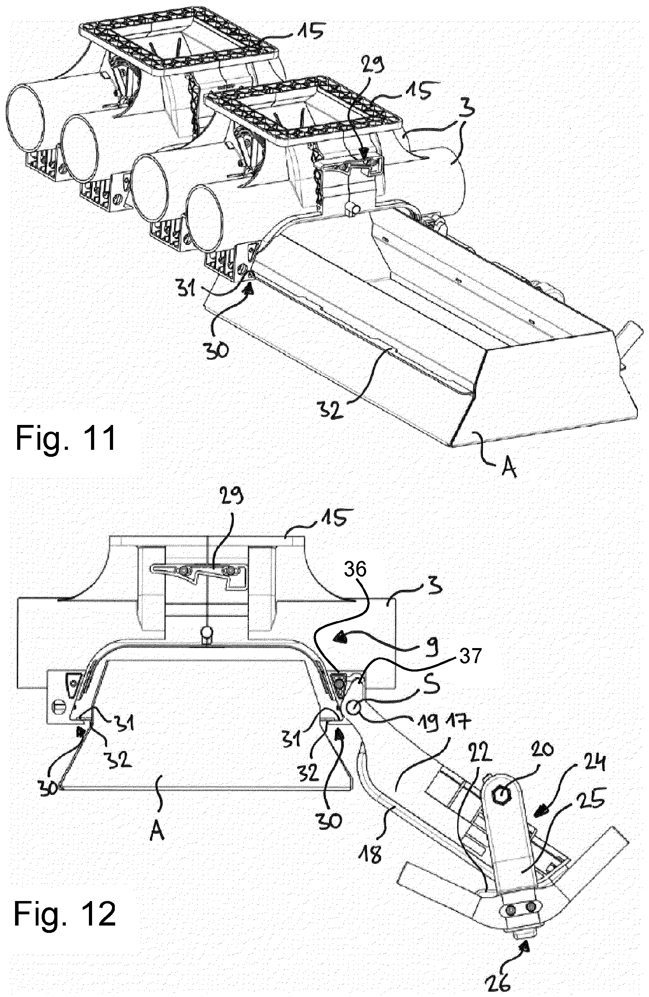

Wie insbesondere in den Fig. 11 und 12 erkennbar, ist unterhalb der mittels eines jeweiligen schwenkbaren Bodenabschnittes 17 verschließbaren Öffnungsquerschnitte der Übergabekammern 9 eine Halteeinrichtung 30 angeordnet, welche zur lösbaren Halterung eines in einen Bauraum unterhalb der schwenkbaren Bodenabschnitte 17 einbringbaren Abdrehproben-Sammelbehälters A ausgebildet ist, wenn sich die schwenkbaren Bodenabschnitte 17 in ihrer Öffnungsstellung befinden. Die Halteeinrichtung 30 umfasst beispielsweise zwei parallele, an entgegengesetzten Enden der durch die schwenkbaren Bodenabschnitte 17 in deren Öffnungsstellung freigegebenen Öffnungsquerschnitte der Übergabekammern 9 angeordnete und sich etwa parallel zu der gemeinsamen Schwenkachse S der Bodenabschnitte 17 sowie zu deren Verbindungswelle 20 erstreckende Führungsschienen 31, welche einerseits zum Tragen des Abdrehproben-Sammelbehälters A sowie zum Einführen und Ausschieben desselben in den Bauraum unterhalb der schwenkbaren Bodenabschnitte 17 ausgebildet ist (vgl. die Fig. 11 und 12). Der entsprechende Abdrehproben-Sammelbehälter A umfasst folglich zwei zu den Führungsschienen 31 der Halteeinrichtung 30 komplementäre Trag- und Führungsstrukturen 32.

## Patentansprüche

1. Pneumatische Verteilmaschine, umfassend
- wenigstens einen Vorratsbehälter (2) zur Aufnahme von Verteilgut mit wenigstens einer Auslassöffnung;
- wenigstens ein der Auslassöffnung des Vorratsbehälters (2) nachgeordnetes Dosierorgan (10);
- eine Mehrzahl an dem Dosierorgan (10) nachgeordneten Übergabekammern (9) zur Überführung von mittels des Dosierorgans (10) dosiertem Verteilgut in eine Mehrzahl an Förderleitungen (3), welche im Bereich einer jeweiligen Überkammer (9) im Wesentlichen parallel zueinander angeordnet sind;
- wenigstens ein Gebläse (7) zur Beaufschlagung der Förderleitungen (3) mit einem Luftstrom; und
- wenigstens ein, einer jeweiligen Förderleitung (3) nachgeordnetes Verteilorgan (6),
**dadurch gekennzeichnet, dass** jeweils ein Bodenabschnitt (17) einer jeweiligen Übergabekammer (9) um eine gemeinsame, im Wesentlichen senkrecht zur Erstreckungsrichtung einer jeweiligen Förderleitung (3) angeordnete Schwenkachse (S) zwischen einer Schließstellung, in welcher der jeweilige Bodenabschnitt (17) die jeweilige Übergabekammer (9) verschließt, und einer Öffnungsstellung, in welcher der jeweilige Bodenabschnitt (17) je einen Öffnungsquerschnitt einer jeweiligen Übergabekammer (9) freigibt und außerhalb des jeweiligen Öffnungsquerschnittes angeordnet ist, schwenkbar ist.

2. Verteilmaschine nach Anspruch 1, **dadurch gekennzeichnet, dass** die gemeinsame Schwenkachse (S) der Bodenabschnitte (17) der Übergabekammern (9) von einer unterhalb der Förderleitungen (3) angeordneten Welle (19) gebildet ist.

3. Verteilmaschine nach Anspruch 1 oder 2, **dadurch gekennzeichnet, dass** die Übergabekammern (9) mit Injektoren (33) ausgestattet sind, welche jeweils eine Düse (34) und/oder einen Diffusor (35) aufweisen, wobei die Düse (34) und/oder der Diffusor (35) eines jeweiligen Injektors (33) insbesondere an dem jeweiligen schwenkbaren Bodenabschnitt (17) einer jeweiligen Übergabekammer (9) befestigt sind.

4. Verteilmaschine nach einem der Ansprüche 1 bis 3, **dadurch gekennzeichnet, dass** die schwenkbaren Bodenabschnitte (17) zumindest einiger, insbesondere aller, Übergabekammern (9), welche einem jeweiligen Dosierorgan (10) nachgeordnet sind, gemeinsam betätigbar sind, um sie gemeinsam zwischen ihrer Schließstellung und ihrer Öffnungsstellung zu verschwenken.

5. Verteilmaschine nach Anspruch 4, **dadurch gekennzeichnet, dass** die schwenkbaren Bodenabschnitte (17) der Übergabekammern (9) mittels einer im Wesentlichen parallel zu der gemeinsamen Schwenkachse (S) der Bodenabschnitte (17) und mit radialem Abstand hiervon angeordneten Verbindungswelle (20) miteinander verbunden sind.

6. Verteilmaschine nach Anspruch 5, **dadurch gekennzeichnet, dass** an der Verbindungswelle (20) der schwenkbaren Bodenabschnitte (17) der Übergabekammern (9) eine Arretiereinrichtung (21) drehfest befestigt ist, um die in ihrer Schließstellung befindlichen schwenkbaren Bodenabschnitte (17) durch Drehen der Verbindungswelle (20) gemeinsam zu arretieren bzw. zu lösen.

7. Verteilmaschine nach Anspruch 6, **dadurch gekennzeichnet, dass** die Arretiereinrichtung (21) wenigstens einen drehfest an der Verbindungswelle (20) der schwenkbaren Bodenabschnitte (17) befestigten Haken (22) aufweist, welcher durch Drehen der Verbindungswelle (20) in bzw. außer Eingriff mit wenigstens einem hierzu komplementären, stationär angeordneten Eingriffsmittel (23) bringbar ist.

8. Verteilmaschine nach einem der Ansprüche 5 bis 7, **dadurch gekennzeichnet, dass** an der Verbindungswelle (20) der schwenkbaren Bodenabschnitte (17) der Übergabekammern (9) eine Handhabe (24), insbesondere in Form eines Hebels (25), angeordnet ist, um die schwenkbaren Bodenabschnitte (17) gemeinsam zwischen ihrer Schließstellung und ihrer Öffnungsstellung zu verschwenken.

9. Verteilmaschine nach Anspruch 8, **dadurch gekennzeichnet, dass** die Handhabe (24) drehfest an der Verbindungswelle (20) der schwenkbaren Bodenabschnitte (17) der Übergabekammern (9) befestigt ist, um die in ihrer Schließstellung befindlichen schwenkbaren Bodenabschnitte (17) durch Drehen der Handhabe (24) und somit der mit der Verbindungswelle (20) drehfest verbundenen Arretiereinrichtung (21) gemeinsam zu arretieren bzw. zu lösen.

10. Verteilmaschine nach Anspruch 8 oder 9, **dadurch gekennzeichnet, dass** der Handhabe (24) ein Schnellverschluss (26) zugeordnet ist, um die Handhabe (24) zumindest in der Schließstellung der schwenkbaren Bodenabschnitte (17) der Übergabekammern (9) zu blockieren bzw. freizugeben.

11. Verteilmaschine nach einem der Ansprüche 1 bis 10, **dadurch gekennzeichnet, dass** den schwenkbaren Bodenabschnitten (17) der Übergabekammern (9) wenigstens eine Rasteinrichtung (36) zugeordnet ist, welche zum Halten der schwenkbaren Bodenabschnitte (17) in deren Öffnungsstellung ausgebildet ist.

12. Verteilmaschine nach Anspruch 11, **dadurch gekennzeichnet, dass** die Rasteinrichtung (36) wenigstens ein, insbesondere elastisch nachgiebiges, Rastelement aufweist, welches mit einem Fortsatz (37) eines jeweiligen schwenkbaren Bodenabschnittes (17) der Übergabekammern (9) in Eingriff bringbar ist, wenn sich der schwenkbare Bodenabschnitt (17) in der Öffnungsstellung befindet.

13. Verteilmaschine nach einem der Ansprüche 1 bis 12, **dadurch gekennzeichnet, dass** unterhalb der mittels eines jeweiligen schwenkbaren Bodenabschnittes (17) verschließbaren Öffnungsquerschnitte der Übergabekammern (9) eine Halteeinrichtung (30) angeordnet ist, welche zur lösbaren Halterung eines in einen Bauraum unterhalb der schwenkbaren Bodenabschnitte (17) einbringbaren Abdrehproben-Sammelbehälters (A) ausgebildet ist.

14. Verteilmaschine nach Anspruch 13, **dadurch gekennzeichnet, dass** die Halteeinrichtung (30) wenigstens eine, insbesondere zwei, Führungsschienen (31) umfasst, welche sich im Wesentlichen parallel zu der gemeinsamen Schwenkachse (S) der schwenkbaren Bodenabschnitte (17) der Übergabekammern (9) erstreckt bzw. erstrecken, wobei die Führungsschiene (31) zum Tragen des Abdrehproben-Sammelbehälters (A) sowie zum Einführen und Ausziehen desselben in den bzw. aus dem Bauraum unterhalb der schwenkbaren Bodenabschnitte (17) ausgebildet ist.
